Europäisches Patentamt

European Patent Office

Office européen des brevets

(11) Veröffentlichungsnummer: **0 405 064**

**A1**

## (12) EUROPÄISCHE PATENTANMELDUNG

(21) Anmeldenummer: 90106227.3

(22) Anmeldetag: 31.03.90

(51) Int. Cl.5: **B65G 47/06, B65G 61/00**

(30) Priorität: 29.06.89 DE 3921350

(43) Veröffentlichungstag der Anmeldung:
02.01.91 Patentblatt 91/01

(84) Benannte Vertragsstaaten:
AT BE CH DE FR GB IT LI LU NL SE

(71) Anmelder: HANS KALTENBACH
MASCHINENFABRIK GMBH & CO.CO.
Gewerbestrasse 18
D-7850 Lörrach(DE)

(72) Erfinder: Trümper, Thomas, Dr.-Ing.
Gewerbestrasse 18
D-7850 Lörrach(DE)

(74) Vertreter: Patentanwälte Dipl.-Ing. Hans
Schmitt Dipl.-Ing. Wolfgang Maucher
Dreikönigstrasse 13
D-7800 Freiburg i.Br.(DE)

(54) Vorrichtung zum Vereinzeln und/oder Entnehmen von Profilstäben.

(57) Eine Vorrichtung (1) zum Vereinzeln und/oder Entnehmen von Profilstäben (2) aus Kassetten (3) hat einen Greifer (5) oder dgl. zum Anheben eines Stabes (2) sowie eine den angehobenen Stab (2) untergreifende und durch Verschiebung in seine Längsrichtung (Pf 1) vereinzelnde Abstützeinrichtung (6). Um praktisch automatisch die Profilstäbe (2) aus dem Stabbündel (4) vereinzeln zu können, ist erfindungsgemäß ein in drei Achsen verstellbares Schubelement (8), welches in Ausgangsstellung vor den Stirnseiten der Stäbe (2) angeordnet ist, sowie eine Abtastvorrichtung (9) zum Ermitteln eines oben liegenden Stabes (2) vorgesehen, wobei die Abtastvorrichtung (9) das Schubelement (8) derart ansteuert, daß dieses vor die Stirnseite des ermittelten oberen Stabes (2) verstellbar und anschließend zusammen mit diesem Stab (2) in Längsrichtung (Pf 1) bewegbar ist. Die konstruktiv vergleichsweise einfach ausgebildete Vorrichtung (1) kann auch Profilstäbe (2) mit unterschiedlichen Profilformen aus einem Bündel (4) vereinzeln und der Kassette (3) entnehmen.

EP 0 405 064 A1

# VORRICHTUNG ZUM VEREINZELN UND/ODER ENTNEHMEN VON PROFILSTÄBEN

Die Erfindung betrifft eine Vorrichtung zum Vereinzeln und/oder Entnehmen von Profilstäben aus Kassetten, mit einem Greifer oder dgl. zum Anheben eines Stabes und mit einer den angehobenen Stab untergreifenden und durch Verschiebung in seiner Längsrichtung vereinzelnden Abstützuneinrichtung, insbesondere einer Stützrolle.

Aus Profilstangen bestehendes Stabmaterial wird gewöhnlich in Bündeln angeliefert. Derartige Profilstäbe, die meist eine Länge von etwa 6 m haben, müssen bis zur weiteren Verarbeitung eingelagert werden. Zu diesem Zweck wird häufig zunächst die Bündelung der angelieferten Stangenbündel, beispielsweise eine Umschnürung, aufgehoben und anschließend der dann gebildete, auch etwas unregelmäßige Materialstapel ungeordnet in einer sogenannten Kassette gelagert.

Im Bedarfsfall, das heißt etwa unmittelbar vor einem ersten Bearbeitungsvorgang, werden die benötigten Profilstäbe aus dem Materialstapel beispielsweise dadurch vereinzelt, daß zunächst eine Bedienungsperson die einzelne, zu entnehmende Profilstange mit der Hand erfaßt und etwas in Längsrichtung herauszieht.

Man hat zwar auch schon eine Vorrichtung geschaffen, die eine Vereinzelung der Stangen weitgehend auch auf maschinellem Wege ermöglicht (vgl. DE-OS 33 30 654). Dabei wird ein freier Endbereich einer zu vereinzelnden Stange manuell zwischen zwei Spannbacken eingelegt, die seitlich mit Abstand vom Stabbündel angeordnet sind und nach einer Spannbewegung dieses Ende sicher und fest halten. Anschließend fahren erhobene, fingerartige Separatoren am Stabbündel entlang und trennen den bislang im Stapel verbliebenen Längsabschnitt des Rohres vom übrigen Stabbündel. Jedoch ist auch bei dieser Vorrichtung zu Beginn eine Handarbeit, nämlich das Einlegen des Stabendes zwischen den Spannbacken nötig.

Andere Vorrichtungen arbeiten nur bei bestimmten, zu vereinzelnden Profilformen mit ausreichender Zuverlässigkeit. So vereinzeln sogenannte Gurtmagazine praktisch ausschließlich nur Rundmaterial oder Vierkantprofile.

Bei einer anderen vorbekannten Vorrichtung wird mittels einer Zange, die drehbar in Vertikalrichtung heb- und senkbar sowie in Längsrichtung der Profilstäbe bewegbar ist, einer der auf dem Stabbündel zuoberst liegenden Stäbe stirnseitig erfaßt, eingeklemmt und durch eine Aufwärtsbewegung der Zange einseitig angehoben (vgl. DE-OS 36 30 726). Anschließend wird ein als Stützrolle ausgebildeter Stützarm, der ebenfalls heb- und senkbar, um eine vertikale Achse verschwenkbar, sowie in Längs-und Querrichtung der Stäbe verfahrbar ist, unter den mit Hilfe der Zange einseitig angehobenen Stab geschwenkt und angehoben. Gleichzeitig oder anschließend wird der Stützarm in Richtung auf das freie Ende des zu vereinzelnden Stabes gefahren, so daß der Stützarm den Stab weiter aus dem Bündel heraushebt. In einem Abstand von z. B. 1 bis 2 m vor dem freien Ende des zu vereinzelnden Stabes wird der Stützarm angehalten und weiter angehoben, um den von der Zange ergriffenen Stab vollständig aus dem Bündel herauszuheben. In dieser Position kann der vereinzelte Stab in Querrichtung zum Stabbündel in eine Übergabeposition verfahren werden, in der er einer Bearbeitungsvorrichtung oder dgl., z. B. einer Richtmaschine, übergeben wird.

Durch ihre dreh- oder schwenkbare und in verschiedene Richtungen bewegbare Zange sowie den Stützarm ist diese vorbekannte Vorrichtung jedoch vergleichsweise kompliziert aufgebaut.

Es besteht daher die Aufgabe, eine einfache und mit vergleichsweise geringem Aufwand herstellbare Vorrichtung der eingangs erwähnten Art zu schaffen, die eine automatische Vereinzelung von Profilstäben auch unterschiedlicher Profilformen gestattet.

Die erfindungsgemäße Lösung dieser Aufgabe besteht bei der Vorrichtung der eingangs erwähnten Art insbesondere darin, daß ein in drei Achsen verstellbares Schubelement vorgesehen ist, welches in Ausgangsstellung vor den Stirnseiten der Stäbe angeordnet ist, daß eine Abtastvorrichtung zum Ermitteln eines oben liegenden Stabes vorgesehen ist, und daß die Abtastvorrichtung das Schubelement derart ansteuert, daß dieses vor die Stirnseite des ermittelten oberen Stabes verstellbar und anschließend zusammen mit diesem Stab in Längsrichtung bewegbar ist. Somit können die einzelnen, in einer Kassette gelagerten Profilstäbe eines Stabbündels nacheinander vereinzelt werden, ohne daß beispielsweise ein manuelles Einlegen eines Stabendes etwa in die Spannbacken der Vorrichtung notwendig wäre. Vielmehr ist eine automatische Vereinzelung der Profilstangen mit Hilfe der vergleichsweise einfachen erfindungsgemäßen Vorrichtung gut möglich. Dabei erfaßt deren Abtastvorrichtung die in einer Vertikal ebene angeordneten X-Y-Koordinaten eines oberen Stabes des Stabbündels. Anschließend kann das in drei Achsen verstellbare Schubelement auf die ermittelten Koordinaten des zu vereinzelnden Stabes verstellt und vor der Stirnseite dieses Stabes positioniert werden. Durch eine Verschiebebewegung des Schubelementes in Längsrichtung des Stabes wird dieser zumindest bereichsweise aus dem Stabbündel herausgeschoben und derart vereinzelt, daß er ohne weiteres - auch auf maschinellem Wege - einer Verarbeitungsmaschine zugeführt werden kann. Dabei ist diese Vereinzelung auch bei unterschiedlichen Profilformen möglich.

Eine besonders vorteilhafte Weiterbildung der erfindungsgemäßen Vorrichtung sieht dabei vor, daß die Abtastvorrichtung oberhalb der nach oben hin offenen Längsseite der Kassette angeordnet und in horizontaler Richtung quer zu dieser Längsseite verfahrbar ist. Ist die Abtastvorrichtung beispielsweise als Abstandsmeßvorrichtung ausgebildet, so kann der Abstand eines oberen Stabes vom Abtaster beispielsweise als X-Wert erfaßt und - durch dessen Verfahren quer zur Längsseite der Kassette sowie der darin befindlichen Stäbe - auch die Y-Koordinate der zu vereinzelnden Profilstangen auf einfache Weise ermittelt werden.

Dabei ist zweckmäßig, wenn die Abtastvorrichtung über eine als NC-Achse dienende Lineareinheit in horizontaler Richtung bewegbar ist, und wenn die Lineareinheit vorzugsweise in einer etwa horizontalen Ebene verschwenkbar ist mit einer seitlich außerhalb der Kassette angeordneten Schwenkachse. Die Y-Koordinaten eines zu vereinzelnden Stabes lassen sich mit einer als NC-Achse dienenden Lineareinheit vergleichsweise einfach ermitteln. Ist diese Lineareinheit und mit ihr der Abtaster aus dem Bereich der Kassette schwenkbar, so kann der vereinzelte Stab nach Bestimmen der X-Y-Koordinaten dem Stabbündel entnommen werden, ohne daß der Abtaster und dessen Lineareinheit noch im Wege wären.

Ein konstruktiv besonders einfacher und vorteilhafter Vorschlag gemäß der Erfindung sieht vor, daß das Schubelement ein horizontal in Längs- und Querrichtung der Kassette sowie vertikal auf- und ab verstellbarer Stößel oder Finger ist, dessen Verfahrweg in Längsrichtung der Stäbe zumindest dem Abstand entspricht, den der Greifer außerhalb des Stabbündels von den dem Stößel abgewandten Endbereichen der Stäbe übersteht. Mit Hilfe eines solchen Stößels können die dem Stabbündel zu entnehmenden Stäbe leicht in den Bereich des Greifers verschoben werden.

Eine weitere vorteilhafte Ausführung gemäß der Erfindung kann darin betehen, daß das Schubelement horizontal in Querrichtung der Kassette über zumindest eine Lineareinheit verstellbar ist, und daß die Lineareinheit (die Lineareinheiten) über wenigstens einen vorzugsweise als Kugelumlaufspindel ausgebildeten Spindelantrieb vertikal auf- und ab verstellbar ist (sind). Während der Linearantrieb und insbesondere dessen Schrittmotor zur Bestimmung der X-Y-Koordinaten eines oberen, zu vereinzelnden Stabes dienen, vermag insbesondere eine Kugelumlaufspindel das eventuell auch hohe Gewicht dieser Lineareinheit zu tragen und diese mitsamt dem Schubelement vor dem zu vereinzelnden Stab mit großer Genauigkeit zu positionieren.

Um die einfache konstruktive Ausbildung der erfindungsgemäßen Vorrichtung noch zu begünstigen, ist es vorteilhaft, wenn das Schubelement, der Greifer und die Abstützeinrichtung an einem gemeinsamen Träger, vorzugsweise an einem Profilträger befestigt sind, der mit seiner Längsachse in Längsrichtung der Kassette angeordnet und vorzugsweise an seinen beiden Endbereichen mit dem Schlitten jeweils eines Linearantriebes verbunden ist, und wenn jeder dieser etwa horizontal angeordneten Linearantriebe an dem vertikal bewegbaren Schlitten jeweils eines Spindelantriebes befestigt ist.

Dabei sieht eine Weiterbildung gemäß der Erfindung von eigener schutzwürdiger Bedeutung vor, daß die mit dem Träger verbundene Abstützeinrichtung zumindest einen etwa C- oder L-förmigen Stützarm hat, der mit einem seiner Schenkel an einer über zwei voneinander beabstandeten Umlenkrollen umlaufender Kette oder dgl. umlaufenden Zugoder Förderelement befestigt ist und dessen freier anderer Schenkel durch eine Umlaufbewegung der Kette den vom Greifer angehobenen Stab untergreift, wobei durch die Umlaufbewegung der Kette der Stützarm vorzugsweise vom oberen Kettentrum zum unteren Kettentrum bewegbar ist. Somit kann der vom Greifer an einem Ende angehobene Profilstab von zumindest einem Stützarm untergriffen und anschließend der bislang im Bündel verbliebene Längsabschnitt des Stabes durch eine weitere Längsbewegung der Kette und des an ihr befestigten Stützarmes aus dem Bündel herausgehoben werden. Dabei können die Stützarme vergleichsweise einfach ausgebildet werden und müssen nicht separat nur für sich beispielsweise anhebbar und absenkbar sein. Werden die Stützarme beispielsweise beim Greifen der Stäbe mittels des Greifers zunächst nicht benötigt, so sind diese zweckmäßigerweise im Bereich des oberen Kettentrums angeordnet, wo sie den Greifbereich des Greifers nicht einschränken können.

Nach einem weiteren Vorschlag gemäß der Erfindung ist vorgesehen, daß eine der beiden Umlenkrollen von dem dem Schubelement abgewandten Ende des in Längsrichtung verschobenen Stabes beabstandet ist, daß der Greifer im wesentlichen aus zwei relativ zueinander verstellbaren und festlegbaren Spannbacken besteht, die an der der Kassette zugewandten Längsseite des Trägers befestigt sind, und daß der freie, den vom Greifer angehobenen Stab untergreifende Schenkel des Stützarms einen größeren Abstand vom Träger hat als der Greifer.

Durch Herabsenken des Trägers können die an dessen einer Längsseite befestigten Spannbacken zum Stabbündel herabgesenkt werden und danach einen oben liegenden, vom Schubelement in Längsrichtung verschobenen Stab ergreifen, um ihn anschließend durch eine Aufwärtsbewegung des Trägers an seinem einen, ergriffenen Ende anzuheben. Da die Umlenkrolle der die Stützarme bewegenden Kette noch vor dem angehobenen Ende dieses Stabes angeordnet ist, können die Stützarme durch eine Umlaufbewegung der Kette unter das angehobene Stabende positioniert werden.

Dabei ist es besonders vorteilhaft, wenn die Abstützeinrichtung drei voneinander beabstandete Stützarme hat, und wenn der Abstand der beiden äußeren Stützarme von dem dazwischen angeordneten Stützarm jeweils höchstens der halben Stablänge entspricht. Somit sind die Stützarme in der Lage, den vom Greifer angehobenen Stab praktisch über seine gesamte Länge zu untergreifen und anzuheben.

Um die Koordinaten eines auf dem Stabbündel befindlichen oberen Profilstabes möglichst genau und einfach zu ermitteln, ist es vorteilhaft, wenn die Abtastvorrichtung ein optoelektronischer Abtaster, vorzugsweise ein optoelektronisches Abstandsmeßgerät, insbesondere ein Laser-Abstandsmeßgerät ist.

Schließlich sieht eine Weiterbildung gemäß der Erfindung vor, daß zum Abtransport der vereinzelten Stäbe diese mittels des Greifers und oder der Abstützeinrichtung auf einer Rollenbahn oder einem Endlosförderer aufsetzbar sind, die neben der Kassette angeordnet ist. Somit können die von der erfindungsgemäßen Vorrichtung vereinzelten Stäbe nacheinander praktisch automatisch zu einer Verarbeitungsmaschine oder dgl. transportiert werden.

Weiterbildungen der Erfindung sind in weiteren Unteransprüchen aufgeführt. Nachstehend wird diese anhand vorteilhafter Ausführungsbeispiele in Verbindung mit den Zeichnungen noch näher erläutert.

Es zeigt:
Fig. 1 eine Vorrichtung zum Vereinzeln von Profilstäben aus einer Kassette in einer perspektivischen Seitenansicht,
Fig. 2 die Vorrichtung aus Fig. 1 in einem schematischen Teil-Längsschnitt im Bereich ihres Schubelementes,
Fig. 3 ebenfalls in einem schematischen Teil-Längsschnitt, die Vorrichtung aus Fig. 1 im Bereich ihrer Abstützung, wobei die Abstützung drei Stützarme hat,
Fig. 4 in einem Teil-Querschnitt den Träger der Vorrichtung aus Fig. 1, wobei an diesem Träger der Greifer, die Abstützung sowie das nicht weiter dargestellte Schubelement befestigt sind,
Fig. 5 die Vorrichtung aus Fig. 1 in einer Teilansicht, wobei der Greifer ein Ende des im übrigen in der Kassette befindlichen Profilstabes anhebt und die Stützarme der Abstützung diesen Profilstab untergreifen.

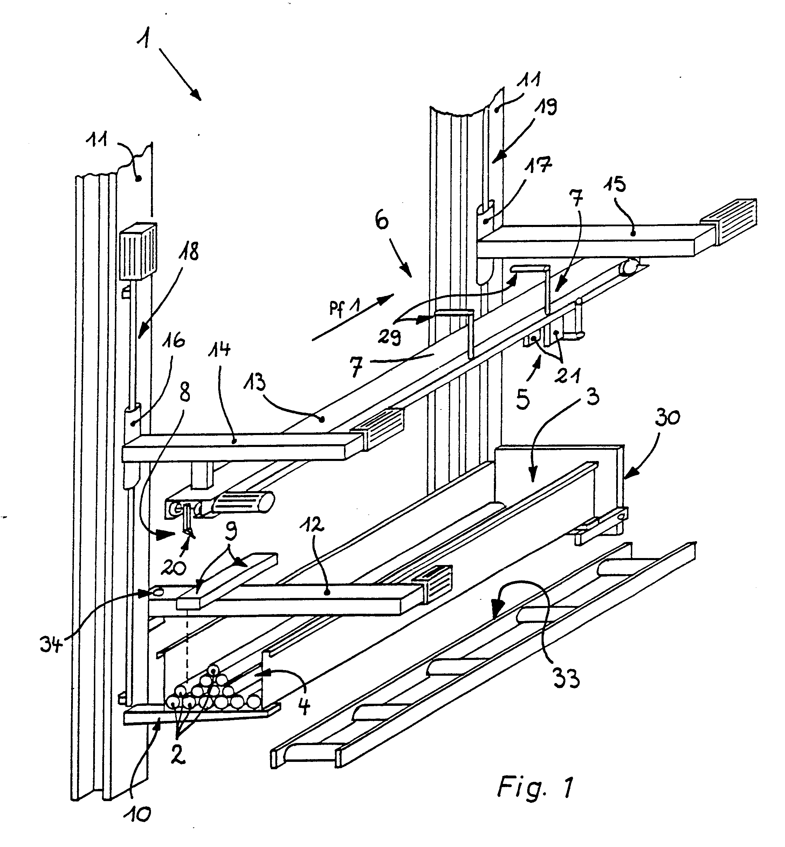

Fig. 1 zeigt in einer perspektivischen Seitenansicht eine Vorrichtung 1, die zum Vereinzeln und zum Entnehmen von Profilstäben 2 aus einer Kassette 3 dient. Diese Profilstäbe 2 sind in der Kassette 3 ungeordnet als Bündel 4 gelagert und können der Kassette 3 im Bedarfsfall, beispielsweise um einen Profilstab 2 einer Verarbeitungsmaschine zuzuführen, einzeln entnommen werden.

Dazu weist die Vorrichtung auch einen Greifer 5 auf, mit dem ein zu vereinzelnder Stab 2 an einem seiner beiden Endbereiche angehoben werden kann. In angehobener Stellung wird eine Abstützeinrichtung 6 unter dem Profilstab 2 bewegt, die mit ihren Stützarmen 7 den Profilstab 2 untergreift und den Stab insbesondere durch eine Horizontalbewegung in Längsrichtung des Stabes vereinzelt sowie auf dessen zunächst noch im Stapel 4 verbliebenen Längsabschnitt anhebt.

Um Profilstäbe 2 unterschiedlicher Profilformen aus einer Kassette praktisch automatisch entnehmen und vereinzeln zu können, hat die Vorrichtung 1 erfindungsgemäß auch ein in drei Achsen verstellbares Schubelement 8, sowie eine Abtastvorrichtung 9 zum Ermitteln eines auf dem Bündel 4 oben liegenden Stabes 2. Dabei steuert die Abtastvorrichtung 9 das Schubelement 8 derart an, daß das Schubelement 8 vor die Stirnseite des ermittelten oberen Stabes 2 verstellbar und anschließend zusammen mit diesem Stab 2 in Längsrichtung Pf 1 bewegbar ist. Durch die Längsbewegung des Schubelementes 8 wird auch der dem Bündel 4 zu entnehmende Stab 2 in seiner Längsrichtung abschnittweise aus dem Stapel 4 herausgeschoben, so daß der Stab 2 an diesem aus dem Bündel 4 ragenden Endbereich vom Greifer 5 gut ergriffen und in der oben beschriebenen Weise angehoben werden kann.

Wie Fig. 1 zeigt, ist die Kassette 3 an ihren beiden Stirnseiten sowie an ihrer oberen Längsseite offen und im Querschnitt etwa U-förmig ausgebildet. Die Kassette 3 liegt mit ihrem Kassettenboden auf jeweils einem Fachbodenträger 10 von zwei seitlich angeordneten Vertikalsäulen 11 auf. Im Bereich der vom Schubelement 8 beaufschlagbaren Stabenden ist die Abtastvorrichtung 9 oberhalb der nach oben hin offenen Längsseite der Kassette 3 angeordnet. Die Abtastvorrichtung 9, die zweckmäßigerweise als Laser-Abstandsmeßgerät ausgebildet ist, ist über eine als NC-Achse dienende Lineareinheit 12 in horizontaler Richtung etwa quer zur Längsachse der Stäbe 2 bewegbar. Durch eine Horizontalbewegung des Abtasters 9 kann somit das äußere Querschnittsprofil des Stangenbündels 4 abgetastet und die stirnseitigen X- und Y-Koordinaten eines zu entnehmenden, oberen Stabes 2 bestimmt werden.

Dabei stellt beispielsweise der vertikale Abstand zwischen dem stirnseitigen Stabende und dem Abtaster 9 die X-Koordinate dar, während sich die Y-Koordinate durch den in horizontaler Richtung mit Hilfe der Lineareinheit 12 zurückgelegten Weg des Abtasters 9 ermitteln läßt. Die Abtastvorrichtung 9, die an einer der Vertikalsäulen 11 außerhalb der Kassette 3 um eine vertikale Schwenkachse (34) schwenkbar gelagert ist, kann nach der Lagebestimmung des oberen Stabes aus dem Bereich der Kassette 3 geschwenkt werden.

Über eine numerische und mit einem Rechner verbundene Steuerung kann nun das Schubelement 8 in den Bereich der Kassette 3 abgesenkt werden. Dazu ist das Schubelement 8, ebenso wie die Abstützeinrichtung 6 sowie der Greifer 5, an einem Träger 13 befestigt, der mit seiner Längsachse in Längsrichtung der Kassette 3 angeordnet und über zwei achsparallele Lineareinheiten 14, 15 quer zur Längsachse der Stäbe bewegbar ist. Jeder dieser Lineareinheiten 14, 15 ist am Schlitten 16, 17 jeweils einer an den Vertikalsäulen 11 befestigten Kugelumlaufspindel 18, 19 befestigt so daß der Träger 14 und mit ihm u. a. auch das Schubelement 8 auf und ab verstellt werden können. Das Schubelement 8 ist im wesentlichen ein am Träger 13 auch in Längsrichtung der Stäbe bewegbarer Ausschiebedorn, Stößel oder Finger 20, der mit Hilfe der Lineareinheiten 14, 15 sowie der Kugelumlaufspindeln 18, 19 auf die ermittelten X-Y-Koordinaten vor der entsprechenden Stirnseite des zu verarbeitenden oberen Stabes 2 positioniert werden kann.

Durch eine Horizontalbewegung des Stößels 20 in Längsrichtung Pf 1 der Stäbe 2 kann der dem Bündel 4 zu entnehmende Stab 2 bereichsweise so weit aus dem Stapel 4 geschoben werden, daß - nach Zurückfahren des Stößels 20 -der im wesentlichen aus zwei Spannbacken 21 bestehende Greifer 5 das überstehende Stabende erfassen, einspannen und durch eine Aufwärtsbewegung des Trägers 13 mit Hilfe der Spindelantriebe 18, 19 anheben kann.

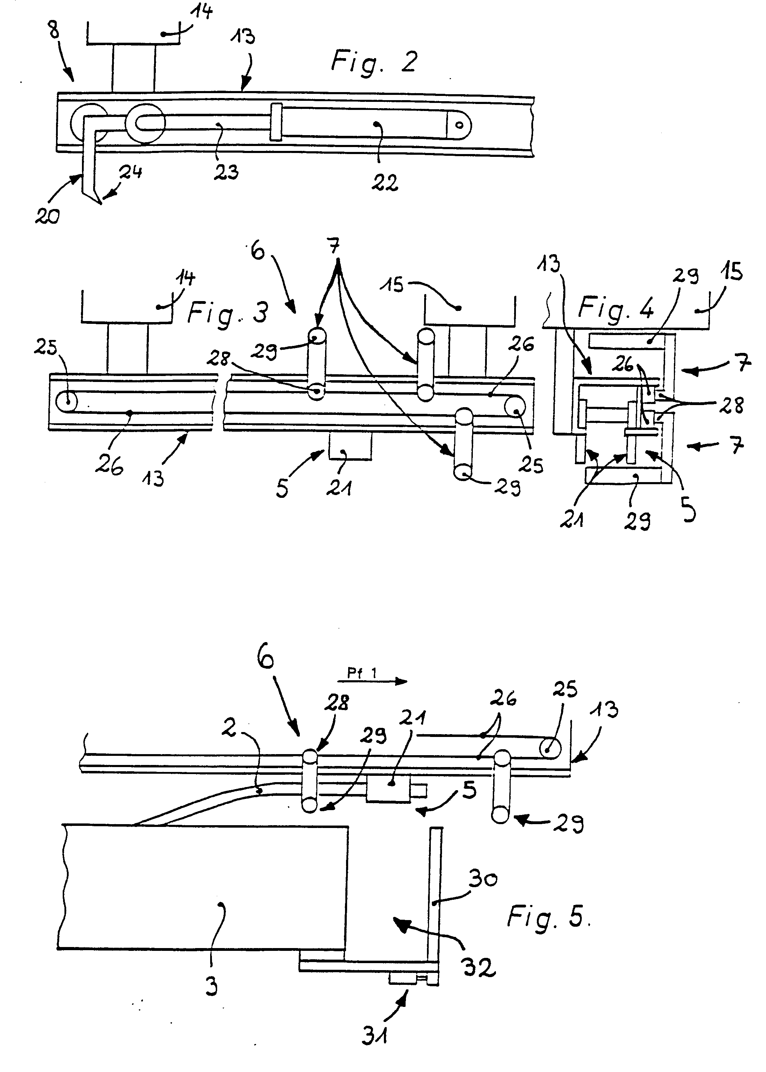

In Fig. 2 ist in einem Teil-Längsschnitt das Schubelement 8 dargestellt, dessen Hydraulikzylinder 22 geschützt im Träger 13 untergebracht ist. Die Kolbenstange 23 dieses Hydraulikzylinders 22 ist im Träger 13 bewegbar geführt und mit dem etwa L-förmigen, zur Kassette ragenden und in einem schrägen Vorsprung 24 auslaufenden Ausschiebedorn 20 verbunden.

In Fig. 3 ist - ebenfalls in einem Teil-Längsschnitt -der Träger 13 mit der mit ihm verbundenen Abstützeinrichtung 6 dargestellt. Die Abstützeinrichtung 6 besteht im wesentlichen aus einer über zwei voneinander beabstandete Umlenkrollen 25 umlaufenden Kette 26, wobei die Umlenkrollen 25 am Träger 13 drehbar befestigt sind.

Wie die Figuren 3 und 4 zeigen, hat die Abstützeinrichtung 6 drei hier etwa C-förmige Stützarme 7, die mit einem der beiden freien Schenkel 28, 29 ihrer C-Form an der Kette befestigt sind und deren anderer freier, zweckmäßigerweise als Stützrolle ausgebildeter Schenkel 29 durch eine Umlaufbewegung des unteren Kettentrums entgegen der Verfahrrichtung Pf 1 des Schubelementes 8 den vom Greifer 5 angehobenen Stab 2 untergreift.

Dazu ist eine der beiden Umlenkrollen 25 von den dem Schubelement 8 abgewandten Ende des in Längsrichtung verschobenen Stabes 2 beabstandet und auch die Spannbacken 21 des Greifers 5 passen zwischen den Träger 13 und den freien Schenkel des Stützarms.

Nachdem mit Hilfe des Schubelementes ein oberer Stab 2 in Längsrichtung Pf 1 verschoben wurde, trifft dieser auf eine - in Fig. 1 und 4 näher dargestellte -Anschlagplatte 30, die zur Begrenzung des Ausschiebeweges dieses Stabes 2 mit einem Endschalter 31 verbunden ist. Diese Anschlagplatte 30 ist um eine horizontale und insbesondere unterhalb der Kassette 3, angeordnete Schwenkachse verschwenkbar und gibt somit zum Absenken des Trägers 13 sowie des Greifers 5 den Weg frei. Anschließend werden die Spannbacken 21 des Greifers 5 in den zwischen der Stirnseite des Bündels 4 und der Anschlagplatte 30 gelegenen Bereich 32 abgesenkt und das ausgeschobene Stabende des mit Hilfe des Schubelementes 8 vereinzelten Stabes 2 vom Greifer 5 ergriffen, zwischen dessen Spannbacken 21 festgespannt und angehoben. Durch eine entsprechende Umlaufbewegung der Kette werden alle drei Stützarme 7 vom oberen Kettentrum über das untere Kettentrum unter das angehobene Stabende derart bewegt, daß der in Fig. 5 linke und zum Teil noch im Bündel 4 befindliche Längsabschnitt des Stabes 2 praktisch über die gesamte Länge ebenfalls angehoben und vom Bündel 4 getrennt wird. Bei dieser Umlaufbewegung bewegt sich das untere Kettentrum entgegen der Fahrrichtung Pf 1 des Schubelementes 8.

Wie Fig. 1 zeigt, ist vom Abtransport der vereinzelten Stäbe neben der Kassette eine Rollenbahn 3 angeordnet, auf die die vereinzelten Stäbe nacheinander mittels des Greifers 5 und/oder der sie untergreifenden Stützarme 7 der Abstützeinrichtung 6 aufsetzbar sind.

Dazu wird der Träger 13 über die Lineareinheiten 14, 15 in eine Position oberhalb der Rollbahn 33 bewegt. In dieser Position wird der Greifer 5 geöffnet und/oder durch eine Umlaufbewegung der Kette 26 die Stützarme 7 vom unteren Kettentrum zum oberen Kettentrum bewegt, wobei sich der angehobene Stab wieder auf die Rollenbahn absenkt. Statt der Rollenbahn 3 kann auch ein Endlosförderer vorteilhaft sein.

Alle vorbeschriebenen oder in den Ansprüchen aufgeführten Einzelmerkmale können einzeln oder in beliebiger Kombination miteinander erfindungswesentlich sein.

**Ansprüche**

1. Vorrichtung zum Vereinzeln und/oder Entnehmen von Profilstäben aus Kassetten, mit einem Greifer oder dgl. zum Anheben eines Stabes und mit einer den angehobenen Stab untergreifenden und durch Verschiebung in seine Längsrichtung vereinzelnden Abstützeinrichtung insbesondere einer Stützrolle, dadurch gekennzeichnet, daß ein in drei Achsen verstellbares Schubelement (8) vorgesehen ist, welches in Ausgangsstellung vor den Stirnseiten der Stäbe (2) angeordnet ist, daß eine Abtastvorrichtung (9) zum Ermitteln eines oben liegenden Stabes (2) vorgesehen ist, und daß die Abtastvorrichtung (9) das Schubelement (8) derart ansteuert, daß dieses vor die Stirnseite des ermittelten oberen Stabes (2) verstellbar und anschließend zusammen mit diesem Stab (2) in Längsrichtung (Pf 1) bewegbar ist.

2. Vorrichtung nach Anspruch 1, dadurch gekennzeichnet, daß die Abtastvorrichtung (9) oberhalb der nach oben hin offenen Längsseite der Kassette angeordnet und in horizontaler Richtung quer zu dieser Längsseite verfahrbar ist.

3. Vorrichtung nach Anspruch 1 oder 2, dadurch gekennzeichnet, daß die Abtastvorrichtung (9) über eine als NC-Achse dienende Lineareinheit (12) in horizontaler Richtung bewegbar ist, und daß die Lineareinheit (12) vorzugsweise in einer etwa horizontalen Ebene verschwenkbar ist mit einer seitlich außerhalb der Kassette (3) angeordneten Schwenkachse (34).

4. Vorrichtung nach einem oder mehreren der Ansprüche 1 bis 3, dadurch gekennzeichnet, daß das Schubelement (8) ein horizontal in Längs- und Querrichtung der Kassette (3) sowie vertikal auf und ab verstellbarer Stößel (20) ist, dessen Verfahrweg in Längsrichtung der Stäbe (2) zumindest dem Abstand entspricht, den der Greifer (5) außerhalb des Stabbündels (4) von den dem Stößel (20) abgewandten Endbereichen der Stäbe (2) übersteht.

5. Vorrichtung nach einem oder mehreren der Ansprüche 1 bis 4, dadurch gekennzeichnet, daß das Schubelement (8) über eine numerische Steuerung steuerbar ist, die mit der Abtastvorrichtung (9) in Steuerverbindung steht, und daß die horizontale und vertikale, jeweils quer zur Längsachse der Kassette (3) angeordnete Verschiebeachse des Schubelementes (8) als NC-Achsen der numerischen Steuerung ausgebildet sind.

6. Vorrichtung nach einem oder mehreren der Ansprüche 1 bis 5, dadurch gekennzeichnet, daß das Schubelement (8) horizontal in Querrichtung der Kassette (3) über zumindest eine Lineareinheit (14, 15) verstellbar ist, und daß die Lineareinheit(en) (14, 15) über wenigstens einen vorzugsweise als Kugelumlaufspindel (18, 19) ausgebildeten Spindelantrieb vertikal auf und ab verstellbar ist (sind).

7. Vorrichtung nach einem oder mehreren der Ansprüche 1 bis 6, dadurch gekennzeichnet, daß das Schubelement (8), der Greifer (5) und die Abstützeinrichtung (6) an einem gemeinsamen Träger (13), vorzugsweise an einem Profilträger befestigt sind, der mit seiner Längsachse in Längsrichtung der Kassette (3) angeordnet und vorzugsweise an seinen beiden Endbereichen mit dem Schlitten jeweils eines Linearantriebes (14, 15) verbunden ist, und daß jeder dieser etwa horizontal angeordneten Linearantriebe (14, 15) an dem vertikal bewegbaren Schlitten (16, 17) jeweils eines Spindelantriebes (18, 19) befestigt ist.

8. Vorrichtung nach einem oder mehreren der Ansprüche 1 bis 7, dadurch gekennzeichnet, daß zur Begrenzung des Verfahrweges des Schubelementes (8) in Längsrichtung der Stäbe (2) eine Anschlagplatte (30) vorgesehen ist, die vorzugsweise von den vom Schubelement (8) in Längsrichtung verschobenen und dem Schubelement (8) abgewandten Enden der Stäbe (2) beaufschlagbar ist, und daß die Anschlagplatte gegebenenfalls mit einem Endschalter (31) verbunden ist, der den in Längsrichtung der Stäbe (2) wirksamen Antrieb des Schubelements (8) beim Auftreffen eines Stabendes auf die Anschlagplatte (30) stoppt.

9. Vorrichtung nach Anspruch 8, dadurch gekennzeichnet, daß die Anschlagplatte (30) um eine vorzugsweise horizontale und insbesondere unterhalb der Kassette (3) angeordnete Schwenkachse verschwenkbar ist.

10. Vorrichtung nach einem oder mehreren der Ansprüche 1 bis 9, dadurch gekennzeichnet, daß die mit dem Träger (13) verbundene Abstützeinrichtung (6) zumindest einen etwa C- oder L-förmigen Stützarm (7) hat, der mit einem (28) seiner Schenkel (28, 29) an einer über zwei voneinander beabstandeten Umlenkrollen (25) umlaufenden Kette (26) oder dgl. umlaufenden Zug- oder Förderelement befestigt ist und dessen freier, anderer Schenkel (29) durch eine Umlaufbewegung der Kette (26) den vom Greifer (5) angehobenen Stab (2) untergreift, wobei durch die Umlaufbewegung der Kette (26) der Stützarm (7) vorzugsweise vom oberen Kettentrum zum unteren Kettentrum bewegbar ist.

11. Vorrichtung nach Anspruch 10, dadurch gekennzeichnet, daß eine der beiden Umlenkrollen (25) von dem dem Schubelement (8) abgewandten Ende des in Längsrichtung verschobenen Stabes (2) beabstandet ist, daß der Greifer (5) im wesentlichen aus zwei relativ zueinander verstellbaren und festlegbaren Spannbacken (21) besteht, die an der der Kassette (3) zugewandten Längsseite des Trägers (13) befestigt sind, und daß der freie, den vom Greifer (5) angehobenen Stab (2) untergreifende Schenkel (29) des Stützarms (7) einen größeren Abstand vom Träger (13) hat als der Greifer (5).

12. Vorrichtung nach Anspruch 10 oder 11, dadurch gekennzeichnet, daß die Abstützeinrichtung (6) drei voneinander beabstandete Stützarme (7) hat, und daß der Abstand der beiden äußeren Stützarme (7) von dem dazwischen angeordneten Stützarm (7) jeweils höchstens der halben Stablänge entspricht.

13. Vorrichtung nach einem oder mehreren der Ansprüche 1 bis 12, dadurch gekennzeichnet, daß die Abtastvorrichtung (9) ein optoelektronischer Abtaster, vorzugsweise ein optoelektronisches Meßgerät, insbesondere ein Laser-Abstandsmeßgerät ist.

14. Vorrichtung nach einem oder mehreren der Ansprüche 1 bis 13, dadurch gekennzeichnet, daß zum Abtransport der vereinzelten Stäbe (2) diese mittels des Greifers (5) und/oder der Abstützeinrichtung (6) auf eine Rollenbahn (33) oder dgl. aufsetzbar sind, die neben der Kassette (3) angeordnet ist.

*Fig. 1*

Fig. 2

Fig. 3

Fig. 4

Fig. 5.

Europäisches
Patentamt

**EUROPÄISCHER RECHERCHENBERICHT**

Nummer der Anmeldung

EP 90106227.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DE - A1 - 2 856 808</u> <br> (THEOBALD) <br> * Seite 22; Fig. 3 * <br> ──── | 1 | B 65 G 47/06 <br> B 65 G 61/00 |

RECHERCHIERTE
SACHGEBIETE (Int. Cl⁵)

B 65 G
B 23 Q

Der vorliegende Recherchenbericht wurde für alle Patentansprüche erstellt.

| Recherchenort | Abschlußdatum der Recherche | Prüfer |
|---|---|---|
| WIEN | 04-10-1990 | PISSENBERGER |